Europäisches Patentamt

**European Patent Office**

Office européen des brevets

(11) Numéro de publication: **0 014 935**

**A1**

## (12) DEMANDE DE BREVET EUROPEEN

(21) Numéro de dépôt: 80100686.7

(22) Date de dépôt: 11.02.80

(51) Int. Cl.³: **B 65 D 85/60**
**B 65 D 75/32**

(30) Priorité: 27.02.79 FR 7905053

(43) Date de publication de la demande:
03.09.80 Bulletin 80/18

(84) Etats Contractants Désignés:
AT BE CH DE GB IT LU NL SE

(71) Demandeur: **Société Anonyme dite: CHOCOFRANCE
"LA BOYERE"
F-77510 Rebais, Seine et Marne(FR)**

(72) Inventeur: **Camus, Roland M.
87, avenue Charles De Gaulle
F-94420 Plessis Trevise Val-de-Marne(FR)**

(74) Mandataire: **Simonnot, Bernard et al,
Cabinet Simonnot 49, Rue de Provence
F-75442 Paris Cédex 09(FR)**

(54) Procede de fabrication d'emballages réutilisables de présentation de produits de confiserie.

(57) Le procédé selon l'invention est essentiellement caractérisé en ce que l'on réalise une coquille (2) par matriçage ou thermoformage d'une première feuille avec motif en relief (3), que l'on moule le produit de confiserie à une température sensiblement égale à son point de fusion dans la coquille obtenue, que l'on recouvre la surface libre du produit refroidi par une seconde feuille (6) en laissant dépasser ses bords et que l'on inclut sans collage les bords dépassants (5, 6) entre deux feuilles (8, 9) adhésives avec collage labile entre elles d'un support, dont l'une comprend une ou plusieurs découpes (10) pour la forme en relief. On réalise ainsi des emballages reutilisables de produits de confiserie sensibles aux élévations de température, notamment de produits de chocolaterie.

FIG.3

Croydon Printing Company Ltd.

0014935

1

## Procédé de fabrication d'emballages réutilisables de présentation de produits de confiserie

La présente invention concerne un procédé de fabrication d'emballages réutilisables de présentation de produits de confiserie à point de fusion relativement bas, sensibles aux élévations de température, comportant un motif en relief dans lequel est inclus ledit produit sans que puisse intervenir une dégradation de la structure dudit produit, ni par action mécanique ni par élévation de température. L'invention couvre en outre les emballages obtenus au moyen du procédé ci-dessus et s'applique à tous produits de confiserie et plus particulièrement aux articles de chocolaterie.

Dans le cas des produits à base de chocolat notamment, on connaît déjà des articles emballés sous forme de pièces de monnaie, ces articles étant réalisés par matriçage à froid d'une pastille de chocolat disposée entre deux feuilles métalliques très minces, généralement en aluminium. Le relief réalisé à l'effigie de la pièce est cependant peu prononcé et il ne serait pas possible d'appliquer à froid une pression suffisante en vue de réaliser un relief plus accentué, sans risque d'écraser la

2

pastille.

Par ailleurs, il ne serait pas possible non plus de réaliser de la même manière un emballage avec relief très marqué, à partir d'une feuille en métal plus épaisse ou d'une feuille thermoformable, en appliquant un traitement thermique, du fait de la fragilité des produits de confiserie vis-à-vis de la température, en particulier le chocolat.

On sait, en effet, que ce dernier présente un point de fusion de l'ordre de 33°C et, en particulier dans le cas de l'emballage direct par thermoformage d'une feuille de matière plastique comme le chlorure de polyvinyle, le polystyrène ou autre matériau thermoformable, nécessitant 140°C environ, il serait détempéré, fondrait et aurait ensuite une mauvaise cristallisation d'où il résulterait un mauvais aspect au démoulage.

A l'heure actuelle, la seule possibilité d'emballage d'un tel produit de confiserie à bas point de fusion et fragile mécaniquement est de réaliser séparément l'emballage en forme et le produit moulé, puis de disposer ce dernier dans l'emballage pour sa présentation finale.

Dans tous les cas, cependant, les emballages connus actuellement ne sont pas réutilisables au gré du consommateur, ne serait-ce qu'à titre de jeu pour effectuer des moulages avec des produits similaires ou même différents.

La présente invention vise à remédier aux inconvénients ci-dessus en fournissant un procédé d'emballage de produits de confiserie se prêtant notamment à la fabrication en continu et présentant par ailleurs un aspect attrayant pour le consommateur.

Conformément à l'invention, on réalise à partir d'une feuille une coquille dont on laisse déborder les surfaces non formées, par matriçage ou par thermoformage, on moule le produit de confiserie à une température sensiblement égale à son point de fusion dans la coquille ainsi obtenue, on recouvre la surface libre du produit refroidi par une seconde feuille en laissant dépasser ses bords et l'on inclut les bords dépassants, éventuellement scellés, entre deux feuilles adhésives d'un support, dont l'une comprend une découpe pour la forme en relief, moyennant quoi le produit de confiserie se présente en forme sous un emballage de la même forme, sans qu'un matriçage ou un thermoformage n'ait pu dégrader sa structure, la coquille étant en outre en un matériau suffisamment résistant pour être réutilisée.

D'autres caractéristiques et avantages de la présente invention ressortiront mieux de la description qui va suivre, faite en regard des dessins annexés, sur lesquels :

la figure 1 représente une vue en coupe d'un produit de confiserie inclus dans sa coquille en forme ;

la figure 2 représente une vue en coupe de la coquille selon la figure 1, maintenue par les feuilles de support ; et

la figure 3 représente une vue en perspective et partiellement arrachée d'une forme possible de présentation de l'article final.

Sur ces dessins, les mêmes références dési-

4

gnent les mêmes éléments.

En se référant à ces dessins, l'article de confiserie 1 peut par exemple être réalisé sous la forme d'une médaille 2 présentant une épaisseur $e$ et comportant un motif en relief 3 d'épaisseur $h$. Le produit de confiserie 1 est inclus dans une coquille en forme 4, réalisée par exemple à partir d'une feuille de chlorure de polyvinyle, polystyrène ou autre, thermoformée. Comme mentionné ci-dessus, les bords 5 de la feuille thermoformée se prolongent au-delà du diamètre $d$ de la médaille. Lors de la fabrication, le produit de confiserie 1 est directement moulé à chaud, à une température sensiblement égale à son point de fusion, dans la coquille 4. Après refroidissement dudit produit, on recouvre la surface libre de ce dernier au moyen d'une seconde feuille en tout matériau approprié 6, elle-même dépassant la dimension $d$ et pouvant être scellée par operculage à chaud ou à froid sur le bord 5.

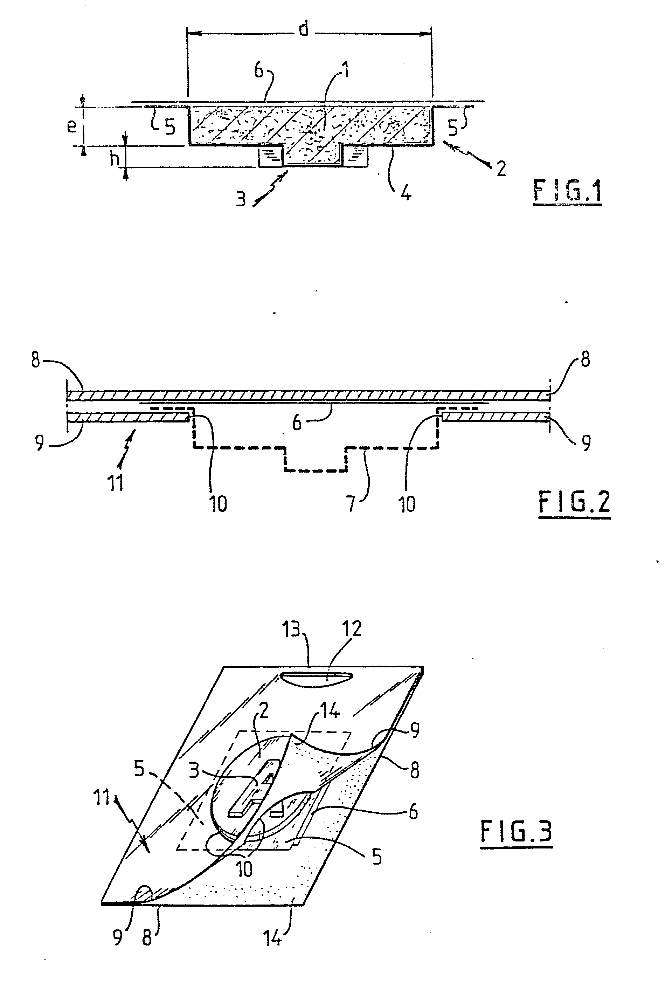

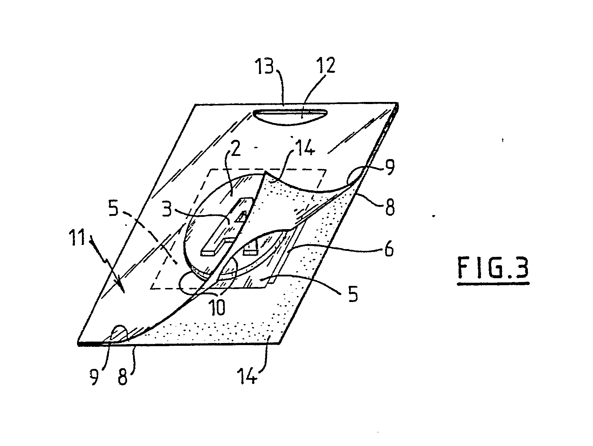

En se référant plus particulièrement aux figures 2 et 3, l'ensemble 7 selon la figure 1 et représenté schématiquement pour des raisons de clarté, est inclus par ses bords entre deux feuilles d'un support semi-rigide tel que du carton 8 et 9. La feuille 8 constitue le fond de l'emballage final, tandis que la feuille 9 présente une découpe 10 laissant apparaître la médaille 2 en saillie sur le verso 11 dudit emballage. Les bords dépassants de la coquille 4 et de la feuille 6 sont inclus sans collage entre les feuilles 8 et 9, celles-ci étant revêtues sur leur face intérieure et au-delà des bords dépassants d'un adhésif pou-

5

vant assurer un collage labile tel qu'une colle au latex. Les deux feuilles 8 et 9 présentent les mêmes dimensions extérieures, ainsi, éventuellement, qu'une découpe 12 pouvant par exemple constituer une poignée ou un organe de préhension 13.

Pour la consommation du produit 1, il suffit de décoller la feuille 9 par exemple à partir d'un coin 14 et de soulever la coquille 4 par son bord 5 pour extraire le produit. On peut ensuite recoller la feuille 9 sur le fond 8, l'emballage reprenant alors sa forme initiale.

Conformément à l'invention, la coquille 4 réalisée à partir d'une feuille de polyvinyle thermoformée ou d'une feuille métallique matricée ou emboutie, présente une résistance suffisante pour garder sa forme et servir ultérieurement au gré du consommateur à constituer un moule permettant de reproduire le motif en relief, soit à partir d'autres produits de confiserie, soit à partir de plâtre, pâte à modeler, etc.

On peut conférer un aspect particulièrement attrayant à l'emballage selon l'invention en réalisant, par exemple, la coquille en un métal coloré ou en une matière plastique métallisée, ou imprimée, les feuilles de support 8 et 9 pouvant en outre comporter tout décor ou légende approprié.

Naturellement, les formes de réalisation possibles selon l'invention ne sauraient se limiter à la réalisation de médailles ou de structures en relief d'épaisseur $h$ et elles s'appliquent aussi bien à la réalisation de figurines en bas-relief et haut-relief avec une ou plusieurs découpes. En outre, la forme de réalisation selon la figure 3

6

décrite à titre d'exemple à partir d'une médaille
en forme générale plane peut être étendue à la
forme d'une figurine en volume, auquel cas l'emballage selon l'invention comporte deux coquilles
accolées et le support semi-rigide est constitué
par deux feuilles comportant les découpes nécessaires.

L'emballage réalisé au moyen du procédé selon l'invention peut en outre être appliqué à tout
article de confiserie, tel que chocolaterie, sucre,
meringue, guimauve, sucre cuit, sucre massé, pâte
à glacer, ganache, avec adjonction possible de
noisettes, amandes, cacahuètes, céréales gonflées
ou autres, tous produits à base de cacao et dérivés
ou produits de remplacement, sucre sous toutes ses
formes d'utilisation, etc.

Par ailleurs, le support semi-rigide peut être
constitué par des feuilles en tout matériau approprié, et comporter, en outre, des organes connus
en soi lui conférant une présentation articulée
ou non, verticale, inclinée ou à plat.

Il est bien entendu que la présente invention
n'a été décrite et représentée qu'à titre explicatif, mais nullement limitatif, et qu'on pourra
y apporter toute modification dans le domaine des
équivalences techniques, sans sortir de son cadre.

i

Revendications de brevet

1.   Procédé de fabrication d'emballage réulisable de présentation de produit de confiserie
à point de fusion relativement bas, comportant
un motif en relief (3) dans lequel est inclus ledit produit comportant lui-même le motif en relief
identique, sans dégradation de la structure dudit
produit, ni par action mécanique, ni par élévation de température, caractérisé par le fait que
l'on réalise, à partir d'une feuille, une coquille
(2) dont on laisse déborder les surfaces (5) non
formées, par matriçage ou par thermoformage, que
l'on moule le produit de confiserie (1) à une
température sensiblement égale à son point de fusion dans la coquille ainsi obtenue, que l'on
recouvre la surface libre du produit refroidi par
une seconde feuille (6) en laissant dépasser ses
bords et qu'on inclut les bords dépassants entre
deux feuilles adhésives entre elles d'un support
(8, 9),dont l'une (9) comprend une ou plusieurs
découpes pour la forme en relief, moyennant quoi
le produit de confiserie se présente en forme
sous un emballage de la même forme, sans qu'un
matriçage ou un thermoformage n'ait pu dégrader
sa structure, la coquille étant en outre en un
matériau suffisamment résistant pour être réutilisée.

2. Emballage réalisé au moyen du procédé
selon la revendication 1, caractérisé par le fait
qu'il comprend au moins une coquille en forme (2)
réalisée en une feuille (4) de métal embouti ou
d'une matière plastique thermoformée, dans la-

2

quelle est inclus le produit lui-même en forme et recouvert d'une seconde feuille (6), les bords dépassants de la coquille et de la seconde feuille étant insérés sans collage entre deux feuilles (8, 9) semi-rigides de support, elles-mêmes adhésives entre elles, l'une (8) constituant un fond et l'autre (9) comprenant une ou plusieurs découpes (10) permettant à la coquille en forme de faire saillie.

3. Emballage selon la revendication 2, caractérisé par le fait que les deux feuilles semi- rigides sont rendues adhésives entre elles au moyen d'un adhésif labile tel qu'une colle au latex.

4. Emballage selon l'une des revendications 2 ou 3, caractérisé par le fait que le produit de confiserie présente une forme générale plane.

5. Emballage selon l'une des revendications 2 ou 3, caractérisé par le fait que le produit de confiserie est une figurine en volume et que ledit emballage comporte deux coquilles accolées et deux feuilles semi-rigides de support munies chacune d'une découpe permettant à chaque coquille en forme de faire saillie.

6. Emballage selon l'une quelconque des revendications 2 à 5, caractérisé par le fait que la coquille est réalisée en un métal coloré ou en une matière plastique métallisée ou imprimée telle que le chlorure de polyvinyle, le polystyrène.

7. Emballage selon l'une quelconque des revendications 2 à 6, caractérisé par le fait que les bords dépassants de la coquille et de la seconde feuille sont scellés par operculage à chaud ou à froid.

3

8. Emballage selon l'une quelconque des revendications 2 à 7, caractérisé par le fait que les feuilles semi-rigides de support comportent une découpe formant poignée ou organe de préhension.

FIG.1

FIG.2

FIG.3

FIG.3

0014935

| Catégorie | Citation du document avec indication, en cas de besoin, des parties pertinentes | Revendication concernee | CLASSEMENT DE LA DEMANDE (Int. Cl. 3) |
|---|---|---|---|
| X | US - A - 3 184 319 (FRITSCHE)  * Ensemble * | 1,2,5 | B 65 D 85/60  75/32 |
|  | GB - A - 1 028 975 (KING)  * Ensemble * | 1,2,6 |  |
|  | US - A - 4 125 190 (DAVIE)  * Ensemble * | 1,2,7 |  |
|  | FR - A - 2 186 931 (CUSTOMAGIC)  * Ensemble * | 8 | **DOMAINES TECHNIQUES RECHERCHES (Int. Cl. 3)**  B 65 D |
| A | GB - A - 1 157 036 (KARINA)  * Ensemble * | 1 |  |
|  | FR - A - 1 123 046 (PUPIER)  * Ensemble * | 1,2,4, 5,7 |  |

**CATEGORIE DES DOCUMENTS CITES**

X: particulièrement pertinent
A: arrière-plan technologique
O: divulgation non-ecrite
P: document intercalaire
T: theorie ou principe à la base de l'invention
E: demande faisant interférence
D: document cite dans la demande
L: document cite pour d'autres raisons
&: membre de la même famille, document correspondant

X  Le présent rapport de recherche a été établi pour toutes les revendications

| Lieu de la recherche | Date d'achevement de la recherche | Examinateur |
|---|---|---|
| La Haye | 27-05-1980 | MARTIN |

OEB Form 1503.1  06.78